# EUROPEAN PATENT APPLICATION

(11) **EP 4 790 540 A1**
(43) Date of publication of application: **12.08.2026**
(21) Application number: 26157145.9
(22) Date of filing: 09.02.2026
(51) Int. Cl.: G06F 3/12, G06Q 10/087

(54) **PRINTING APPARATUS AND PRODUCT HANDLING SYSTEM**

(30) Priority: 10.02.2025 JP 2025020243
(71) Applicant: Ishida Co., Ltd., Kyoto-shi, Kyoto 606-8392 (JP)
(72) Inventor: KOBAYASHI, Takahide, Ritto-shi, Shiga, 520-3026 (JP); SUGIMOTO, Akira, Ritto-shi, Shiga, 520-3026 (JP); HAGA, Toshihide, Ritto-shi, Shiga, 520-3026 (JP); MORITA, Kyohei, Ritto-shi, Shiga, 520-3026 (JP); OKAMOTO, Tomoya, Ritto-shi, Shiga, 520-3026 (JP); KAWANISHI, Naoto, Ritto-shi, Shiga, 520-3026 (JP)
(74) Representative: Global IP Europe Patentanwaltskanzlei

(57) **Abstract**

A product handling system 100 includes a production instruction apparatus 90 that instructs production of products A, a product information storage apparatus 92 that stores a product information group composed of pieces of product information regarding a plurality of kinds of the products A, and a handling apparatus 1 that causes a display section 6 to display the product information group, and accepts, from a worker, printing instructions for product information regarding a certain kind of the products A. The handling apparatus 1 extracts product information regarding part of the products from the product information group stored in the product information storage apparatus 92, based on the products for which the production is instructed by the production instruction apparatus 90, and causes the display section 6 to display the extracted product information regarding the part of the products.

## Description

### TECHNICAL FIELD

Aspects of the present invention relate to a printing apparatus and a product handling system.

### BACKGROUND

In the back-of-house area in a supermarket, products, such as daily dishes and lunch boxes, are produced (manufactured), and product labels on which product information is printed are attached to the produced products. Such work is performed using a product handling apparatus as disclosed in, for example, Japanese Unexamined Patent Publication No. H11-304578. In such a product handling apparatus, in order to issue a label, for example, work to input a call number or the like of a product to call desired product information from a product master that is a product information group stored in a storage section, is necessary.

### SUMMARY

However, for example, since product information regarding many products is registered in the product master stored in the storage section, when a worker does not remember a call number of a product for which the label is issued, it is necessary to search for the call number from a product master record being a paper medium, for example, which takes time and effort. In addition, in the course of inputting a product number, an input error or the like of the product number occurs in some cases.

Therefore, an object of aspects of the present invention is to provide a printing apparatus and a product handling system that are capable of reducing time and effort required to select a product to be given a printing instruction and reducing printing on a wrong product.
(1) A printing apparatus according to an aspect of the present invention is a printing apparatus that prints product information regarding products, including a production instruction acquisition section that acquires production instructions for the products, and a control section that causes a display section to display a product information group composed of pieces of product information regarding a plurality of kinds of the products, and accepts, from a worker, printing instructions for product information regarding a certain kind of the products, in which the control section extracts product information regarding part of the products from the product information group stored in a storage section, based on the products for which the production instructions are acquired by the production instruction acquisition section, and causes the display section to display the extracted product information regarding the part of the products.

In the printing apparatus with this configuration, the product information regarding all the products stored in the storage section is not displayed on the display section, but only the extracted product information regarding the part of the products is displayed on the display section, the extracted product information being extracted based on the products for which the production instructions are acquired by the production instruction acquisition section. This enables the worker to instruct printing of certain product information from among products narrowed down. As a result, it is possible to reduce time and effort required to select the products to be given the printing instructions as well as to lessen a possibility that a wrong product is subjected to the printing.

(2) A product handling system according to an aspect of the present invention includes a production instruction apparatus that instructs production of products, a product information storage apparatus that stores a product information group composed of pieces of product information regarding a plurality of kinds of the products, and a handling apparatus that causes a display section to display the product information group, and accepts, from a worker, printing instructions for product information regarding a certain kind of the products, in which the production instruction apparatus, the product information storage apparatus, and the handling apparatus are communicably connected to each other via a network, and the handling apparatus extracts product information regarding part of the products from the product information group stored in the product information storage apparatus, based on the products for which production instructions have been given by the production instruction apparatus, and causes the display section to display the extracted product information regarding the part of the products.

In the product handling system with this configuration, the product information regarding all the products stored in the product information storage apparatus is not displayed on the display section, but only the extracted product information regarding the part of the products is displayed on the display section of the handling apparatus, the extracted product information being extracted based on the production instructions acquired by the handling apparatus. This enables the worker to instruct printing of certain product information from among products narrowed down. As a result, it is possible to reduce time and effort required to select the products to be given the printing instructions as well as to lessen the possibility that a wrong product is subjected to the printing.

(3) In the product handling system according to the above (2), the handling apparatus may include a production figure acquisition section that acquires information regarding production figures in relation to the production instructions, and the handling apparatus may cause the display section to display the product information on the products for which there are the production figures that are acquired by the production figure acquisition section. This configuration allows only product information regarding products actually manufactured at a manufacturing site to be displayed on the display section from among the products with the production instructions given by the production instruction apparatus. This makes it possible to further reduce the time and effort required to select the products to be given the printing instructions as well as to further lessen the possibility that a wrong product is subjected to the printing.

(4) The product handling system according to the above (3) may further include a terminal apparatus that is configured separately from the handling apparatus and accepts, from the production instruction apparatus, instructions of production of the products, and in the product handling system, the terminal apparatus may generate, via an input by an operator, information regarding the production figures acquired by the production figure acquisition section. With this configuration, for example, if a place where the products are produced and a place where the handling apparatus is installed are distant from each other, the production figures can be input via the terminal apparatus, from the place where the products are produced that is distant from the handling apparatus.

(5) In the product handling system according to any one of the above (2) to (4), the handling apparatus may further include a printing section that prints the product information, and the handling apparatus may cause the display section to display product information regarding the products that is extracted based on the products for which the production is instructed by the production instruction apparatus so as to enable distinguishing between product information regarding a product of the products that is printed by the printing section and product information regarding a product of the products that is not printed by the printing section. This configuration enables the worker to distinguish and recognize the products handled by the handling apparatus, so that options of the product information regarding the products displayed on the display section are narrowed down. This makes it possible to further reduce the time and effort required to select the products to be given the printing instructions as well as to further lessen the possibility that a wrong product is subjected to the printing.

According to the aspects of the present invention, the printing apparatus and the product handling system that are capable of reducing the time and effort required to select the products to be given the printing instructions and reducing the printing on a wrong product, are provided.

### BRIEF DESCRIPTION OF THE DRAWINGS

FIG. 1 is a schematic diagram of a label issuing system according to an embodiment.
FIG. 2 is a block diagram illustrating a functional configuration of the label issuing system in FIG. 1.
FIG. 3 is an example of a manufacturing instruction input screen displayed on a display section of a server apparatus in FIG. 1.
FIG. 4 is an example of a manufacturing figure input screen displayed on a display section of a tablet terminal in FIG. 1.
FIG. 5(A) is a diagram for explaining an operation on the manufacturing figure input screen; FIG. 5(B) is an example of display of planned quantities and a manufactured quantity on the manufacturing figure input screen.
FIG. 6 is a perspective view of a weighing-packaging-labeling apparatus constituting the label issuing system in FIG. 1.
FIG. 7 is an example of a product information display screen displayed on a display section in FIG. 6.
FIG. 8 is an example of a manufacturing figure display screen displayed on the display section in FIG. 6.
FIG. 9(A) is a diagram for explaining an operation on the manufacturing figure display screen; FIG. 9(B) is a diagram for explaining an operation on the product information display screen.
FIG. 10(A) is an example of an issuing completion dialog box displayed on the product information display screen; FIG. 10(B) is a diagram for explaining an operation on the manufacturing figure display screen.
FIGS. 11(A) and 11(B) are diagrams for explaining operations on the manufacturing figure input screen.
FIGS. 12(A) and 12(B) are diagrams for explaining operations on the manufacturing figure input screen.
FIG. 13(A) is an example of display of the planned quantities and manufactured quantities on the manufacturing figure input screen; FIG. 13(B) is a diagram for explaining an operation on the manufacturing figure display screen.
FIG. 14 is a diagram for explaining an operation on the manufacturing figure display screen.
FIG. 15(A) is a perspective view of an electronic scale according to a modification; and FIG. 15(B) is a perspective view of a label issuing apparatus according to a modification.

### DETAILED DESCRIPTION

Hereinafter, a label issuing system (product handling system) 100 according to an embodiment will be described with reference to the drawings. In the description of the drawings, the same elements are denoted by the same reference signs, and redundant description will be omitted. In addition, "A or B" in the present specification may include any one of A and B, and including both A and B is not excluded.

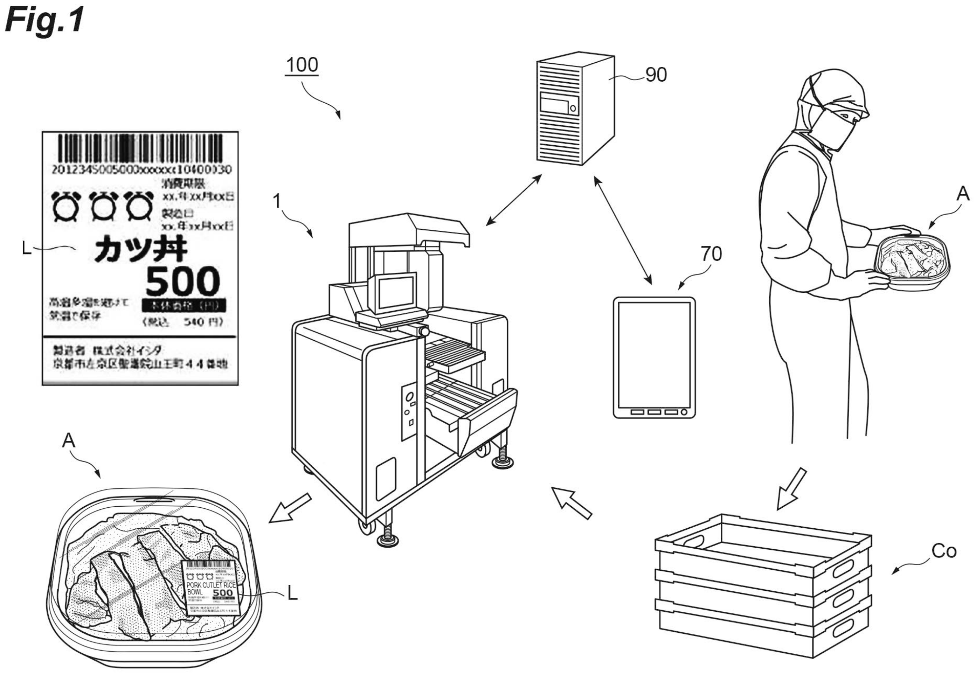

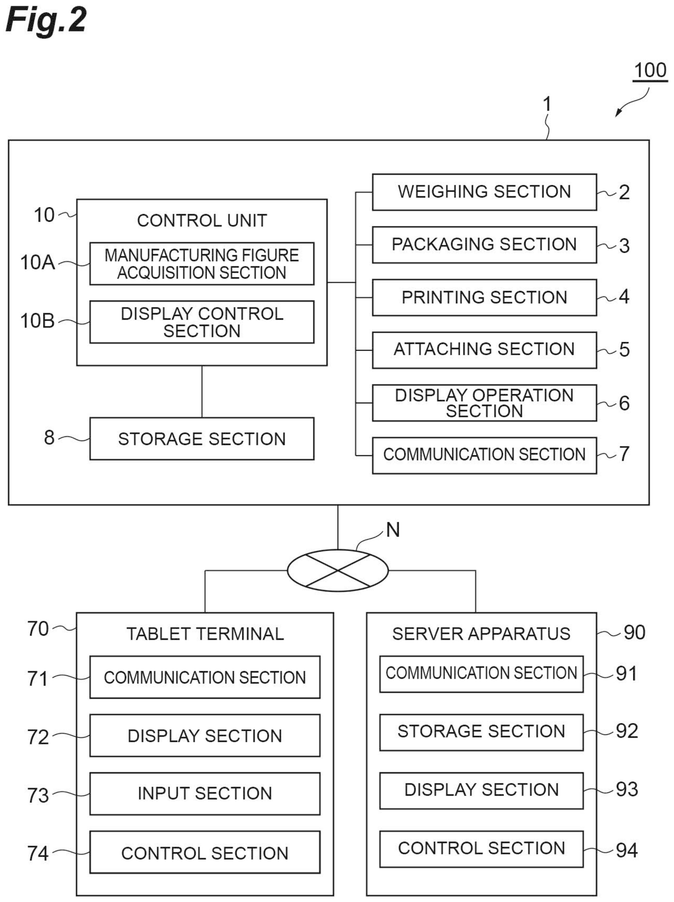

As illustrated in FIGS. 1 and 2, the label issuing system 100 according to the present embodiment is configured to include a server apparatus (production instruction apparatus) 90, a tablet terminal (or terminal apparatus) 70, and a weighing-packaging-labeling apparatus (handling apparatus and printing apparatus) 1. The server apparatus 90 is configured to be communicable with each of the tablet terminal 70 and the weighing-packaging-labeling apparatus 1 via a network N. Communication between the tablet terminal 70 and the weighing-packaging-labeling apparatus 1 is executed via the server apparatus 90. The network N is, for example, some kind of communication network, such as a dedicated line, a VPN (Virtual Private Network), a mobile communication network, and the Internet.

The server apparatus 90 transmits a daily manufacturing plan (manufacturing instruction information configured to contain information, such as types and quantities of products A to be manufactured) to the tablet terminal 70 deployed at a manufacturing site. In other words, the server apparatus 90 can instruct manufacturing (production) of the products A. The tablet terminal 70 obtains manufacturing instructions (production instructions) transmitted from the server apparatus 90 and presents the manufacturing instructions to a worker. The worker manufactures the products A of instructed types and quantities based on the manufacturing instructions presented by the tablet terminal 70. In addition, the tablet terminal 70 can input manufacturing figures (production figures) based on the manufacturing instructions. The manufacturing figures input by the worker are transmitted to the weighing-packaging-labeling apparatus 1 via the server apparatus 90.

The products A manufactured at the manufacturing site are moved in a state of being accommodated in containers (returnable boxes) Co, to a place where labeling work is performed (that is, a place where the weighing-packaging-labeling apparatus 1 is installed). The weighing-packaging-labeling apparatus 1 weighs and packages each of the products A moved from the manufacturing site, and attaches (labels with) a product label L to each product A. The weighing-packaging-labeling apparatus 1 acquires the manufacturing figures input by the tablet terminal 70 via the server apparatus 90. When calling a product name to be printed on the product label L, the weighing-packaging-labeling apparatus 1 selects the product name from product names contained in the acquired manufacturing figures.

Hereinafter, each of the server apparatus 90, the tablet terminal 70, and the weighing-packaging-labeling apparatus 1 will be described in detail.

The server apparatus 90 is installed, for example, in an office, such as a head office, or located in a factory, a store, or the like in which the tablet terminal 70 and the weighing-packaging-labeling apparatus 1 are installed. The server apparatus 90 mainly includes a communication section 91, a storage section (product information storage apparatus) 92, a display section 93, and a control section 94. The communication section 91 is an interface that enables the communication with each of the tablet terminal 70 and the weighing-packaging-labeling apparatus 1. The storage section 92 is a storage apparatus, such as an HDD (hard disk drive) and an SSD (Solid State Drive). The storage section 92 stores a product master. In the product master (product information group) stored in the storage section 92, pieces of product information, such as call numbers, product names, production area names, unit prices (prices per unit weight), product prices, consume-by dates, and information regarding allergy, are stored in association with each other.

In a case of storing the product master in the weighing-packaging-labeling apparatus 1, the server apparatus 90 transmits, to the weighing-packaging-labeling apparatus 1, the pieces of product information stored as the product master in the storage section 92 periodically or in response to a request. This allows synchronization between the product information stored as the product master in the storage section 92 of the server apparatus 90 and the product information stored as the product master in the storage section 8 of the weighing-packaging-labeling apparatus 1.

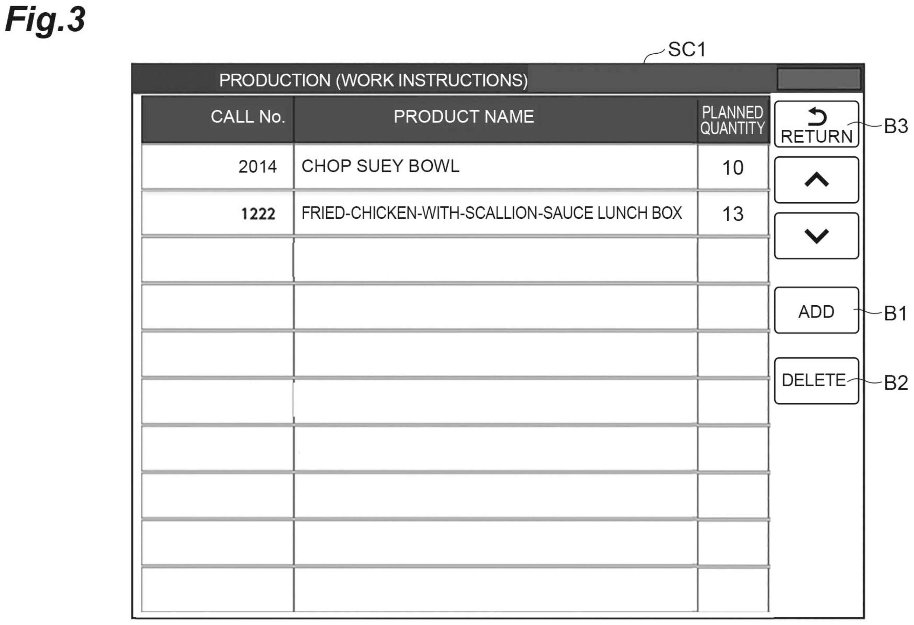

The display section 93 displays information manipulated in the server apparatus 90. An example of the display section 93 is a liquid crystal display. The display section 93 displays, for example, a manufacturing instruction input screen SC1 (see FIG. 3) for creating the manufacturing instructions. Contents displayed on the display section 93 are controlled by the control section 94. The control section 94 is a controller configured to include a ROM (Read Only Memory), a RAM (Random Access Memory), a CPU (Central Processing Unit), and the like. Various pieces of processing (functions) in the control section 94 are executed under control of the CPU by reading predetermined computer software on hardware, such as the CPU and a main storage section. The control section 94 controls various pieces of processing in the communication section 91, the storage section 92, and the display section 93.

In addition, the server apparatus 90 can instruct manufacturing of the products as described above. The server apparatus 90 has a manufacturing instruction creation function of creating the manufacturing instructions and transmitting the created manufacturing instructions to the tablet terminal 70. The creation of the manufacturing instructions can be executed on the manufacturing instruction input screen SC1 as illustrated in FIG. 3 that is displayed on the display section 93. Specifically, Call No. (product name) and a planned quantity are input via an input screen (not illustrated) that is displayed by operating an add button B1. This makes it possible to create a manufacturing instruction for a single product A.

A worker can create the manufacturing instructions for a plurality of kinds of the products A by repeating such work. A delete button B2 enables a manufacturing instruction for a selected single product A to be deleted (canceled). When creation of desired manufacturing instructions is finished, the worker operates a manufacturing instruction send button (not illustrated) that is displayed when a return button B3 is operated, for example. This makes it possible to transmit the manufacturing instructions created in the server apparatus 90 to the tablet terminal 70.

The tablet terminal 70 is installed at the manufacturing site in a factory in which daily dishes or lunch boxes are manufactured. The number of the tablet terminals 70 installed at the manufacturing site may be one or more. The tablet terminal 70 is configured as a separate body from a main body 1a in the weighing-packaging-labeling apparatus 1. The tablet terminal 70 is operated by the worker who manufactures the products A. The tablet terminal 70 includes a communication section 71, a display section 72, an input section 73, and a control section 74.

The communication section 71 is an interface that enables the communication with the server apparatus 90. The display section 72 displays information manipulated in the tablet terminal 70 and displays an operation screen for the worker to input. The input section 73 is a section for inputting various pieces of information (signals) to the tablet terminal 70 via the operation screen, and for example, a touchscreen or the like corresponds thereto. The control section 74 is a controller configured to include a ROM, a RAM, a CPU, and the like. Various pieces of processing in the control section 74 are executed under control of the CPU by reading predetermined computer software on hardware, such as the CPU and a main storage section. The control section 74 controls various pieces of processing in the communication section 71, the display section 72, and the input section 73.

The tablet terminal 70 can accept the manufacturing instructions for the products A from the server apparatus 90. In addition, the tablet terminal 70 can generate, via an input from an operator, information regarding the manufacturing figures to be acquired by a manufacturing figure acquisition section (production figure acquisition section and production instruction acquisition section) 10A of the weighing-packaging-labeling apparatus 1, and transmit the information to the manufacturing figure acquisition section 10A of the weighing-packaging-labeling apparatus 1. In other words, the tablet terminal 70 has a manufacturing figure creation function of generating the information regarding the manufacturing figures and transmitting the generated information regarding the manufacturing figures to the weighing-packaging-labeling apparatus 1.

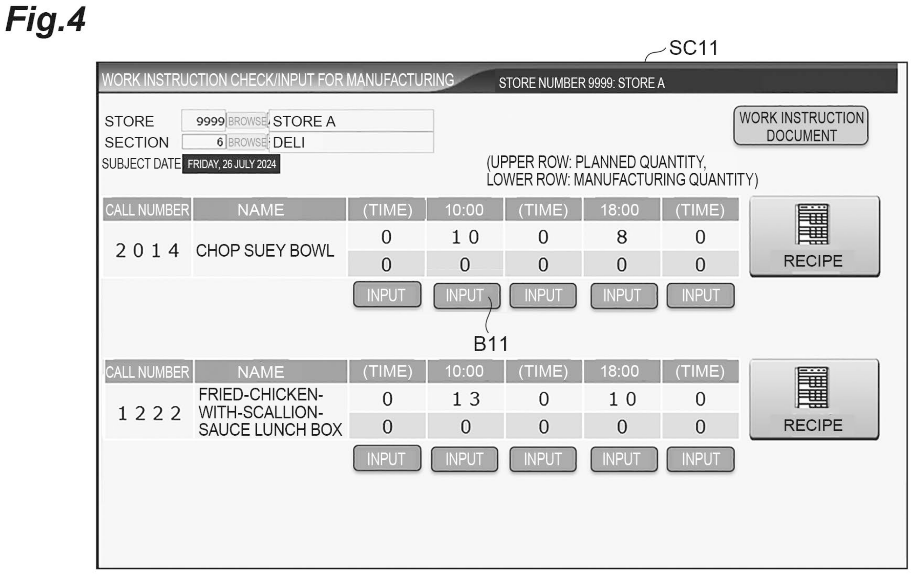

Hereinafter, input (registration) processing for a manufacturing figure in the tablet terminal 70 will be described. The input of the manufacturing figure can be executed on a manufacturing figure input screen SC11 as illustrated in FIG. 4 that is displayed on the display section 72. Information in which the manufacturing instructions transmitted from the server apparatus 90 are reflected is displayed on the manufacturing figure input screen SC11. Specifically, the product names and the planned quantities contained in the manufacturing instructions that are transmitted from the server apparatus 90 are displayed. The planned quantity for each product name transmitted from the server apparatus 90 and for each time slot for transmission of a manufacturing instruction is displayed on the manufacturing figure input screen SC11 of the present embodiment.

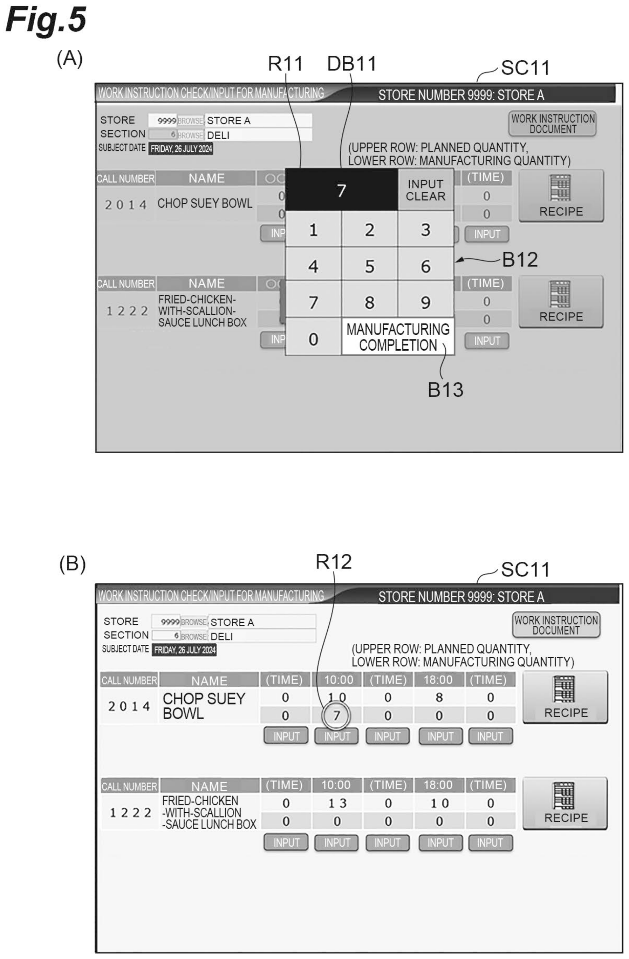

The worker inputs a manufactured quantity of products A actually manufactured in the manufacturing site. For example, when inputting an actually manufactured quantity in relation to a manufacturing instruction of 10 chop suey bowls that is transmitted from the server apparatus 90 around 10:00, the worker operates an input button B11 corresponding to the time, 10:00. When the input button B11 illustrated in FIG. 4 is operated, an input dialog box DB11 as illustrated in FIG. 5(A) is displayed. The worker operates a number button B12 constituting the input dialog box DB11. An operated numeric value is displayed in a display region R11 in the input dialog box DB11, then the worker operates a manufacturing completion button B13. This allows the manufactured quantity input via the input dialog box DB11 to be displayed in a region R12 in which a manufactured quantity is displayed, in the manufacturing figure input screen SC11, as illustrated in FIG. 5(B). The worker inputs (registers) manufacturing figures by repeating such work.

The information regarding the manufacturing figure input on the manufacturing figure input screen SC11 is transmitted to the server apparatus 90 periodically or in response to a request from the server apparatus 90. This enables the server apparatus 90 to acquire the information regarding the manufacturing figure at the manufacturing site. The server apparatus 90 stores the information regarding the manufacturing figure acquired from the tablet terminal 70 in the storage section 92 as a latest manufacturing figure. In addition, the server apparatus 90 transmits the information regarding the latest manufacturing figure to the weighing-packaging-labeling apparatus 1, periodically or in response to a request from the weighing-packaging-labeling apparatus 1.

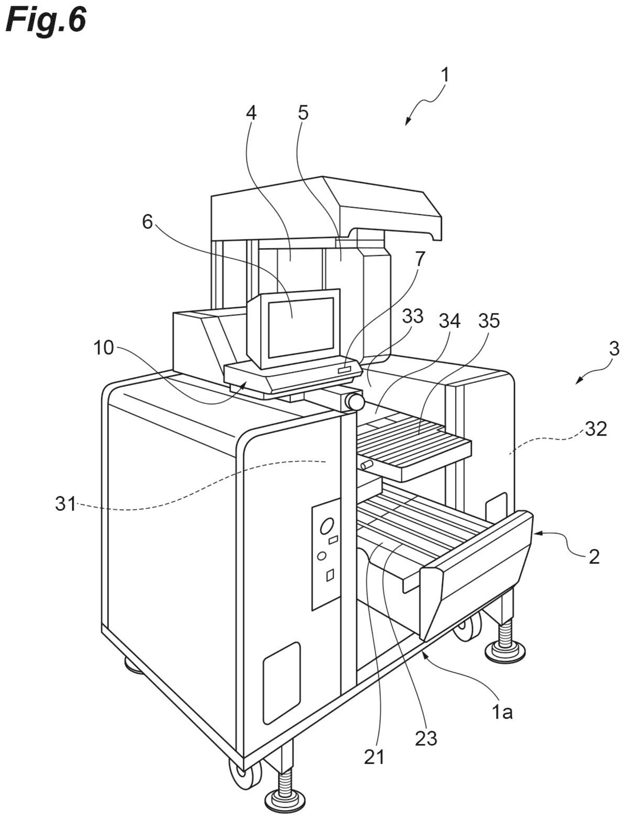

As illustrated in FIGS. 1, 2, and 6, the weighing-packaging-labeling apparatus 1 is an apparatus that weighs and packages each product A, issues the product label L on which product information on the product A is printed, and attaches the product label L to the product A. When a product A is placed on a weighing pan 21, its weight is weighed by a load sensor that supports the weighing pan 21, and upon determination by a control unit 10 determines that a weighing value, from a weighing section 2, of the product is settled, the control unit 10 controls a conveyance mechanism 23 to convey the product up to a packaging section 3, controls the packaging section 3 to package the product, controls a printing section 4 to issue the product label L, and controls an attaching section 5 to attach the product label L to the product packaged by the packaging section 3. The weighing-packaging-labeling apparatus 1 causes a display operation section (display section) 6 to display the product information group stored as the product master, and accepts, from a worker, printing instructions for product information regarding a certain kind of the products A from among the displayed product information group. In other words, the weighing-packaging-labeling apparatus 1 prints, based on a type of the product A accepted from the worker, a product label L relevant to the type of the accepted product A.

The weighing-packaging-labeling apparatus 1 includes the weighing section 2, the packaging section 3, the printing section 4, the attaching section 5, the display operation section 6, a communication section 7, and the control unit 10. The weighing section 2 weighs the product. The weighing section 2 is provided in a center of a front section of the main body 1a. The weighing section 2 includes the weighing pan 21 that is loaded on the load sensor, such as a load cell, and weighs the weight of the product, such as a food product, that is placed on a tray, and the conveyance mechanism 23 that conveys the product placed on the weighing pan 21 to the packaging section 3.

The packaging section 3 packages the product weighed by the weighing section 2 with a stretch film. The packaging section 3 includes a lift mechanism 31 that raises the product to a predetermined position, a film roll support mechanism 32 that supports the stretch film, a film feeding mechanism 33 that feeds the stretch film to a predetermined position, a folding mechanism 34 that folds the stretch film toward a bottom surface side of the product, and a sealing mechanism 35 that seals the stretch film.

The lift mechanism 31 raises the product obtained from the weighing section 2 to a predetermined position, and uses the product to lift the stretch film stretched by the film feeding mechanism 33 from below to the predetermined position. The folding mechanism 34 folds the stretch film lifted together with the product toward the bottom surface side of the product to package the product. The sealing mechanism 35 applies thermal seal to the stretch film that is folded by the folding mechanism 34 toward the bottom surface side of the product.

The printing section 4 prints the product information on a label and issues the label as the product label L. The printing section 4 is installed above the folding mechanism 34 and the sealing mechanism 35. The printing section 4 is integrally configured with the attaching section 5. A part of the product information, which is configured to contain a plurality of product items, is printed on the product label L. Examples of the product information stored as the product master include the call numbers, the product names, the production area names, the unit prices (prices per unit weight), the product prices, the consume-by dates, and the information regarding allergy. Product information on a product to be weighed can be acquired from the product master in which a plurality of the pieces of product information are registered. The product master is stored in the storage section 8. The storage section 8 may be, for example, an auxiliary storage apparatus, such as an SSD and an HDD, that is built into the weighing-packaging-labeling apparatus 1, or may be an external server apparatus or the like that is communicable via the network.

The attaching section 5 attaches the product label L issued by the printing section 4 to the product packaged by the packaging section 3. The attaching section 5 is provided in such a way as to be movable between the printing section 4 and the product to which the product label L is attached. The attaching section 5 attaches the product label L obtained from the printing section 4 to a predetermined position of the product packaged with the film.

The display operation section 6 is provided on an upper portion of the main body 1a. The display operation section 6 is a touchscreen capable of displaying various information for the worker and accepting an operation of the worker. The display operation section 6 may be configured to include a touchscreen and fixed keys. In a case where the fixed keys are included, a "unit price" key, a "fixed price" key, a "tare" key, a "print" key, a "call" key, and the like necessary as a pricing scale are provided, and these keys can be appropriately arranged together with numeric keys. Information necessary for operating the weighing-packaging-labeling apparatus 1 is displayed on the display operation section 6 under control of the control unit 10.

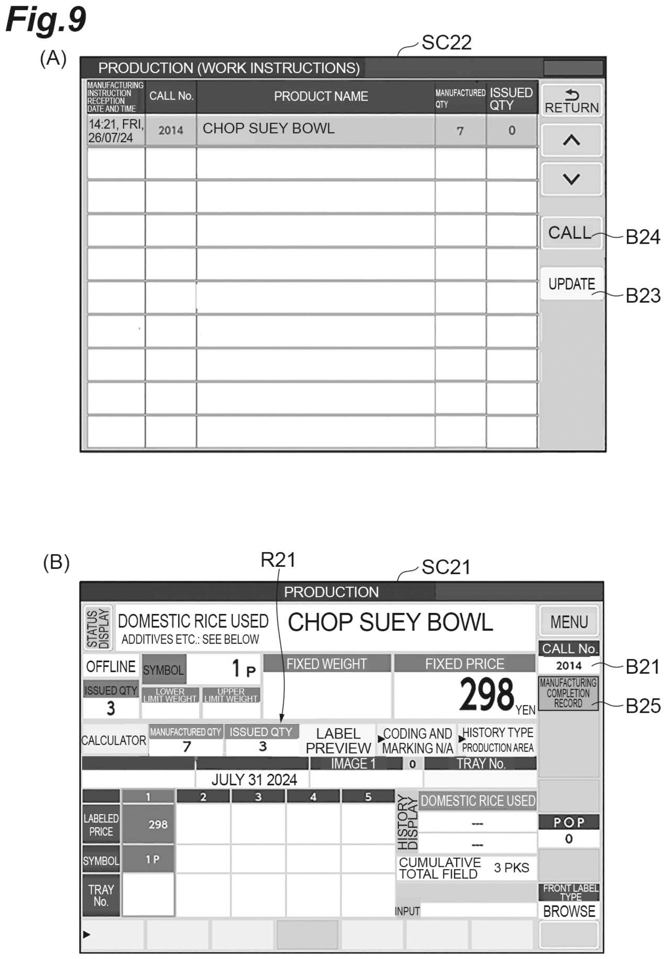

For example, when a product to be weighed is designated by the operator (when Call No. is input), a product information display screen SC21 as illustrated in FIG. 9(B) is displayed on the display operation section 6. Call No., a product name, a production area name, a unit price, and the like of the product to be weighed are displayed on the product information display screen SC21. The communication section 7 is an interface that communicates with the server apparatus 90 and the like via the network N.

The control unit 10 is installed on the upper portion of the main body 1a. The control unit 10 controls various operations in the weighing-packaging-labeling apparatus 1. The control unit 10 is a controller configured to include a ROM, a RAM, a CPU, and the like. Various pieces of processing (functions) in the control unit 10 are executed under control of the CPU by reading predetermined computer software on hardware, such as the CPU and a main storage section. In addition, for example, the control unit 10 loads programs stored in the ROM onto the RAM and executes the programs with the CPU, thereby forming the manufacturing figure acquisition section 10A and a display control section 10B.

The manufacturing figure acquisition section 10A is a section that acquires the information regarding the manufacturing figures in relation to the manufacturing instructions. The manufacturing figure acquisition section 10A acquires the information regarding the manufacturing figure input by the tablet terminal 70 via the server apparatus 90. The manufacturing figure acquisition section 10A acquires the information regarding the manufacturing figure from the storage section 92 of the server apparatus 90 in which the information regarding the manufacturing figure input by the tablet terminal 70 is stored.

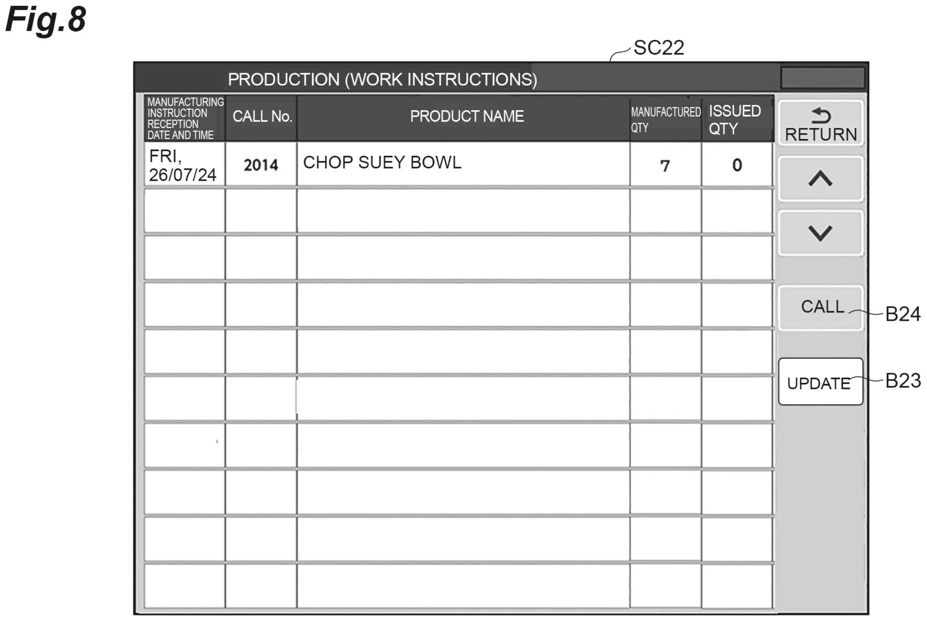

The display control section 10B extracts product information regarding part of the products A from the product master stored in the storage section 92, based on the products A for which the manufacturing is instructed by the server apparatus 90, and causes the display operation section 6 to display the extracted product information regarding the part of the products A as illustrated in FIG. 9(B), for example. The display control section 10B of the present embodiment causes the display operation section 6 to display, based on the information regarding the manufacturing figure acquired by the manufacturing figure acquisition section 10A, only product information on products A that are actually manufactured in the manufacturing site from among the products A for which the manufacturing is instructed by the server apparatus 90, as a manufacturing figure display screen SC22 as illustrated in FIG. 8, for example.

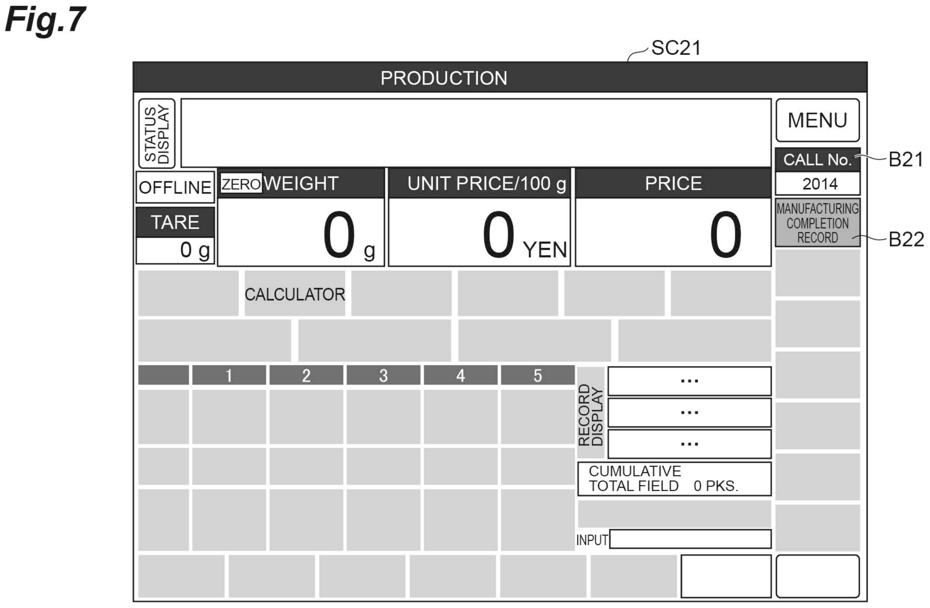

Hereinafter, issuing processing of the product labels L in the weighing-packaging-labeling apparatus 1 will be described. When handling the products A using the weighing-packaging-labeling apparatus 1, the worker operates a call No. button B21 on the product information display screen SC21, as illustrated in FIG. 7, that is displayed at the time of activation on the display operation section 6. This allows a list (not illustrated) of all the products A that is stored as the product master stored in the storage section 8 to be displayed on the display operation section 6. In this list, for example, Call No. and a product name are displayed for each of the products A.

The product information display screen SC21 of the weighing-packaging-labeling apparatus 1 of the present embodiment is provided with a manufacturing completion record button B22 as illustrated in FIG. 7. When the manufacturing completion record button B22 is operated by the worker, a list of the products A based on the information regarding the manufacturing figure acquired by the manufacturing figure acquisition section 10A is displayed. Specifically, as illustrated in FIG. 8, a manufacturing figure display screen SC22 on which Call No. of the products actually manufactured in the manufacturing site, the product name, and the number of the products (manufactured quantity) actually manufactured in the manufacturing site are displayed, is displayed on the display operation section 6. In addition to the above Call No. of the products, product name, and number of products (manufactured quantity), a date and time (manufacturing instruction reception date and time) when the information regarding the manufacturing figure is received from the tablet terminal 70 (server apparatus 90) and a quantity of the issued product labels L (issued quantity) are displayed on the manufacturing figure display screen SC22.

The worker can receive the information regarding the latest manufacturing figure from the storage section 92 of the server apparatus 90 by operating an update button B23 on the manufacturing figure display screen SC22. As illustrated in FIG. 9(A), when the worker operates a call button B24 in a state in which one product A is selected from the list displayed on the manufacturing figure display screen SC22 (for example, a state in which a background color changes to blue or black and white inversion display is provided), the product information display screen SC21 as illustrated in FIG. 9(B) is displayed, and a state in which handling of the product A displayed on the product information display screen SC21 becomes possible is brought about. That is, when each product A (chop suey bowl) conveyed from the manufacturing site in a state of being accommodated in the container Co is placed on the weighing pan 21 by the worker, the product A is weighed and packaged, and subjected to labeling processing (hereinafter, the series of these pieces of processing will be simply referred to as "labeling processing").

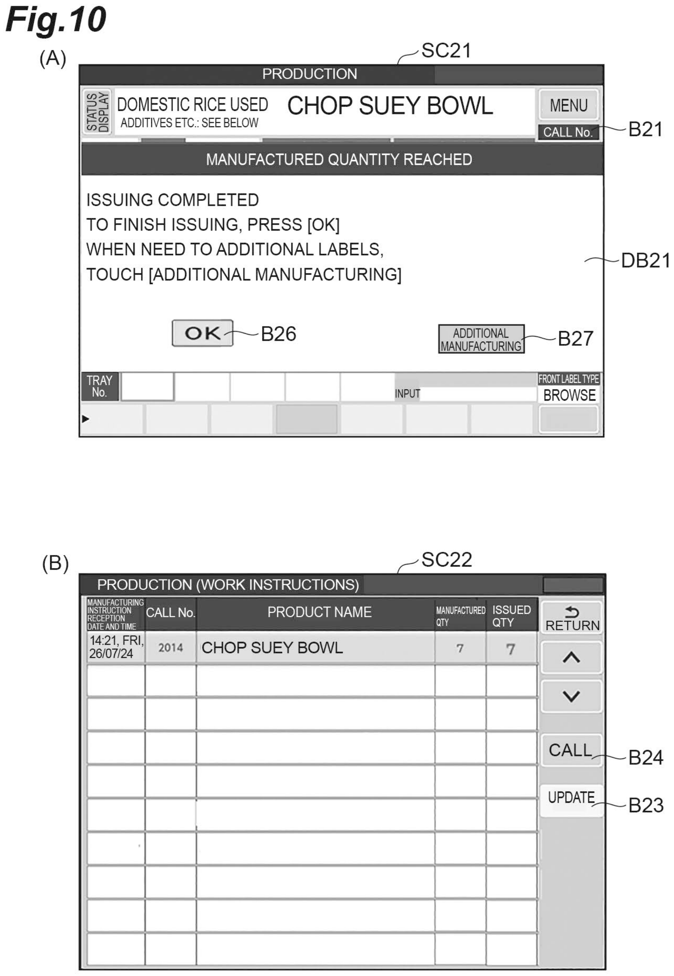

Since the issued quantity is displayed as the counted number of handled products on the product information display screen SC21, while referring to a display region R21 in which the manufactured quantity and the issued quantity are displayed, the worker places each product A on the weighing pan 21. When the labeling processing of the products A is successively executed in this manner and the manufacturing figure (manufactured quantity) acquired by the manufacturing figure acquisition section 10A is reached, an issuing completion dialog box DB21 as illustrated in FIG. 10(A) is displayed on the display operation section 6. This enables the worker to recognize that the labeling processing of the products A in quantity actually manufactured in the manufacturing site is completed. When an OK button B26 is operated on the issuing completion dialog box DB21, the manufacturing figure display screen SC22 is displayed as illustrated in FIG. 10(B). A row is displayed as grayed out (for example, a state in which the background color changes to gray) for the products A for which the labeling processing is completed on the manufacturing figure display screen SC22. When an additional manufacturing button B27 is operated on the issuing completion dialog box DB21 illustrated in FIG. 10(A), additional manufacturing of products A of this kind becomes possible.

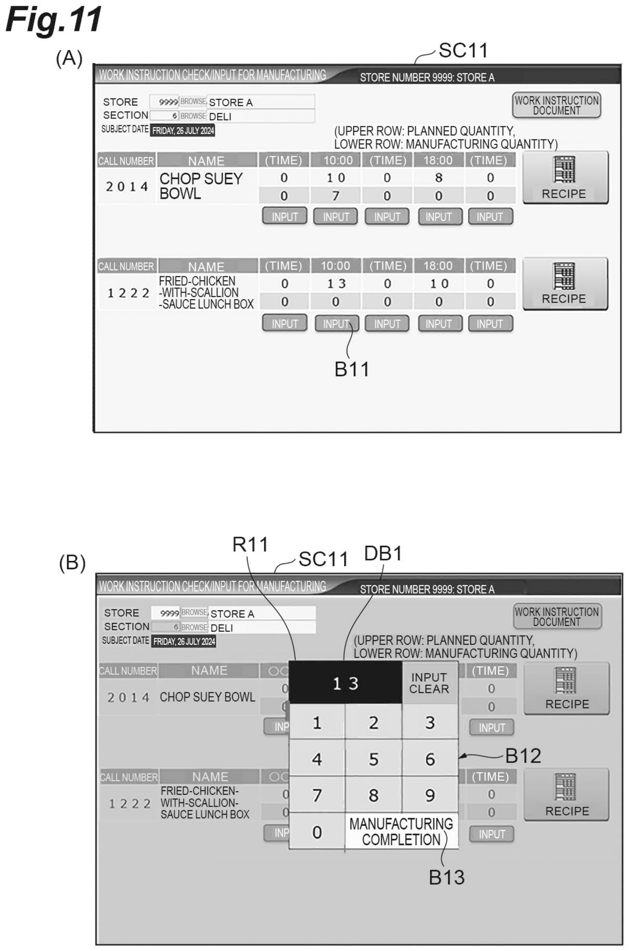

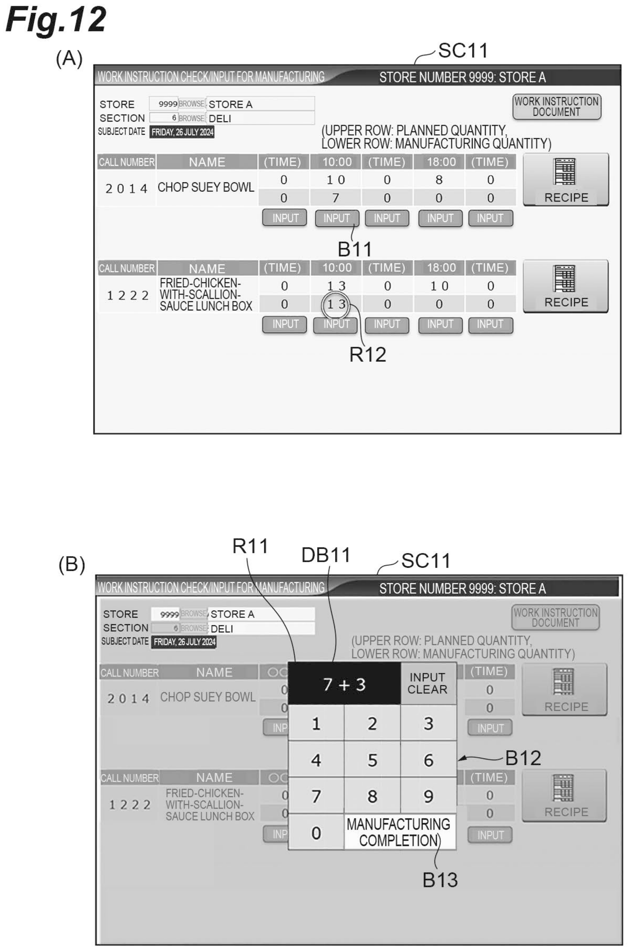

Next, processing when a manufacturing figure is input chronologically later than the earlier input (registration) of the manufacturing figure (see FIG. 4) in the tablet terminal 70 will be described. As illustrated in FIG. 11(A), when a manufactured quantity of fried-chicken-with-scallion-sauce lunch boxes is input, similarly to earlier description, the manufactured quantity is input via the input dialog box DB11 illustrated in FIG. 11(B) that is displayed by operating the input button B11. This allows the manufactured quantity input via the input dialog box DB11 to be displayed in the region R12 in which a manufactured quantity is displayed, in the manufacturing figure input screen SC11, as illustrated in FIG. 12(A).

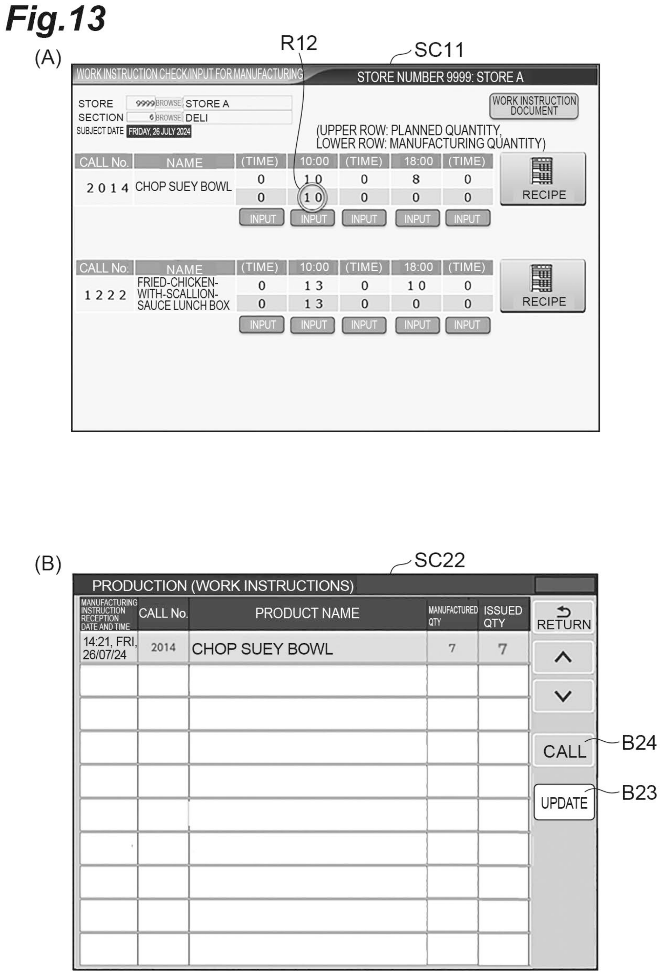

Next, a case of additionally inputting a manufactured quantity of the chop suey bowls that are input earlier will be described. As illustrated in FIG. 12(A), when a manufactured quantity of chop suey bowls is additionally input, similarly to earlier description, the manufactured quantity is input via the input dialog box DB11 as illustrated in FIG. 12(B) that is displayed by operating the input button B11. At this time, the numeric value, "3", of the manufactured quantity input earlier is displayed in the display region R11, and the quantity input by operating the input button B11 is displayed with "+" added. In FIG. 12(B), "3" is input as an additional manufactured quantity, thereby displaying +3 in the display region R11. Through such input processing, the manufactured quantity input via the input dialog box DB11 is displayed in the region R12 in which a manufactured quantity is displayed, in the manufacturing figure input screen SC11, as illustrated in FIG. 13(A).

Next, processing when the information regarding the manufacturing figure is updated in the weighing-packaging-labeling apparatus 1 will be described. For example, as illustrated in FIG. 13(B), when the update button B23 is operated in a state in which the handling is completed for all of the chop suey bowls in quantity of the manufacturing figure, the manufacturing figure acquisition section 10A requests the server apparatus 90 to transmit a latest manufacturing figure. In response to the request, the server apparatus 90 transmits the latest manufacturing figure to the weighing-packaging-labeling apparatus 1. This enables the weighing-packaging-labeling apparatus 1 to acquire information regarding the latest manufacturing figure.

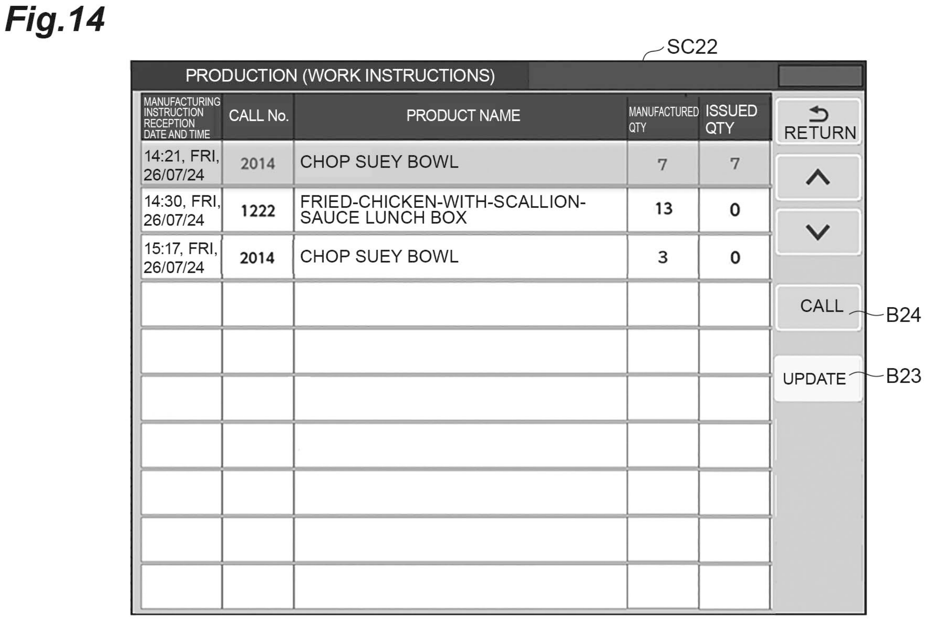

The additional input of the manufacturing figures with the tablet terminal 70 is described in the preceding paragraphs, and at this time, the information regarding the manufacturing figures transmitted to the server apparatus 90 is in the latest state. In this case, when the update button B23 is operated on the manufacturing figure display screen SC22 illustrated in FIG. 13(B), an updated manufacturing figure display screen SC22 as illustrated in FIG. 14 appears in the weighing-packaging-labeling apparatus 1. That is, manufacturing figures regarding the manufacturing figures (fried-chicken-with-scallion-sauce lunch boxes and additional chop suey bowls) that are input with the tablet terminal 70 are added.

As illustrated in FIG. 14, the display control section 10B causes the display operation section 6 to display the manufacturing figure display screen SC22 in a state in which product information regarding products A that are printed by the printing section 4 (that is, the labeling processing is executed) and product information regarding products A that are not printed by the printing section 4 (that is, the labeling processing is not executed) are distinguishable. Note that, on the manufacturing figure display screen SC22 illustrated in FIG. 14, while the row of the products A after being subjected to the labeling processing is displayed as grayed out (for example, a state in which the background color changes to gray), rows of the products A for which the labeling processing is not completed are subjected to normal display (the background is white).

Workings and effects of the label issuing system 100 according to the above embodiment will be described. In the label issuing system 100 according to the above embodiment, the product information regarding all the products that is stored as the product master stored in the storage section 8 of the weighing-packaging-labeling apparatus 1, is not displayed on the display operation section 6 of the weighing-packaging-labeling apparatus 1, but only the extracted product information regarding the part of the products that is extracted based on the manufacturing instructions acquired by the weighing-packaging-labeling apparatus 1 from the server apparatus 90, is displayed on the display operation section 6 of the weighing-packaging-labeling apparatus 1. This enables the worker to instruct printing of certain product information from among products narrowed down. As a result, it is possible to reduce time and effort required to select the products to be given the printing instructions as well as to lessen the possibility that a wrong product is subjected to the printing.

In the label issuing system 100 according to the above embodiment, the weighing-packaging-labeling apparatus 1 causes the display operation section 6 to display the product information on the products A included in the manufacturing figures acquired by the manufacturing figure acquisition section 10A. This allows only the product information regarding the products A actually manufactured in the manufacturing site to be displayed on the display operation section 6 from among the products A with the manufacturing instructions given by the server apparatus 90. As a result, it is possible to further reduce the time and effort required to select the products to be given the printing instructions as well as to further lessen the possibility that a wrong product is subjected to the printing.

The tablet terminal 70 of the label issuing system 100 according to the above embodiment generates, via the input by the operator, the information regarding the manufacturing figures to be acquired by the manufacturing figure acquisition section 10A of the weighing-packaging-labeling apparatus 1. This makes it possible to transmit the manufacturing figures to the weighing-packaging-labeling apparatus 1 via the server apparatus 90, if a place where the products A are manufactured and a place where the weighing-packaging-labeling apparatus 1 is installed are distant from each other, for example.

In the weighing-packaging-labeling apparatus 1 of the label issuing system 100 according to the above embodiment, as illustrated in FIG. 14, for the products A for which manufacturing instructions have been given by the server apparatus 90, product information regarding products A that have been printed by the printing section 4 and product information regarding products A that have not been printed by the printing section 4 are displayed on the display operation section 6 in a distinguishable manner. This enables the worker to distinguish and recognize the products A handled by the weighing-packaging-labeling apparatus 1, so that options of the products A (certain kind of the products A) to be printed are narrowed down. This makes it possible to further reduce time and effort required to select the products A to be given the printing instructions as well as to further lessen the possibility that a wrong product is subjected to the printing.

While the embodiment is described above, the aspect of the present invention is not limited to the above embodiment. Various modifications can be made without departing from the gist of the invention.

In the above embodiment, the example in which the server apparatus 90 mainly transmits and receives the information regarding the product master, the manufacturing plan, and the manufacturing figures is described; however, the present invention is not limited thereto. For example, the information regarding the product master, the manufacturing plan, and the manufacturing figures may be acquired by the tablet terminal 70 and the weighing-packaging-labeling apparatus 1 accessing, periodically or as necessary, the storage section 92 of the server apparatus 90 in which the information regarding the product master, the manufacturing plan, and the manufacturing figures is stored. Further, the storage section that stores the information regarding the product master, the manufacturing plan, and the manufacturing figures is not limited to the storage section 92 built in the server apparatus 90, and may be a storage apparatus configured to be communicable with the server apparatus 90, the tablet terminal 70, or the weighing-packaging-labeling apparatus 1.

In the above embodiment and the above modifications, the example in which the product master is stored in both the storage section 92 of the server apparatus 90 and the storage section 8 of the weighing-packaging-labeling apparatus 1 is described; however, the product master may be stored only in the server apparatus 90.

In the embodiment and the modifications described above, the example in which the tablet terminal 70 and the weighing-packaging-labeling apparatus 1 are configured to be communicable with each other via the server apparatus 90 is described; however, the configuration may be such that the tablet terminal 70 and the weighing-packaging-labeling apparatus 1 are configured to be directly communicable with each other.

The example in which the manufacturing figure acquisition section 10A of the above embodiment and the above modifications acquires the information regarding the manufacturing figures in relation to the manufacturing instructions is described; however, the manufacturing figure acquisition section 10A may acquire only the information regarding the manufacturing instructions without acquiring the information regarding the manufacturing figures. That is, the manufacturing figure acquisition section 10A may function as the production instruction acquisition section.

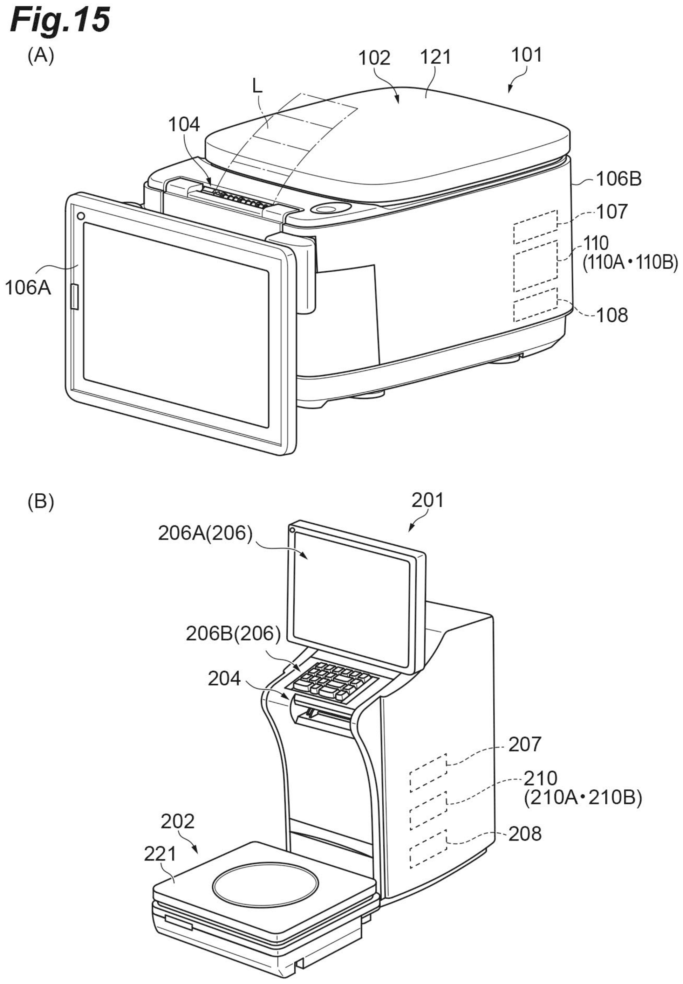

In the above embodiment and the above modifications, the example in which the weighing-packaging-labeling apparatus 1 as illustrated in FIG. 1 is applied as the handling apparatus or the printing apparatus according to the aspect of the present invention is described; however, the present invention is not limited thereto. For example, a face-to-face electronic scale 101 including a salesperson-side operation section 106A and a customer-side operation section 106B as illustrated in FIG. 15(A) may be applied as the handling apparatus or the printing apparatus according to the aspect of the present invention. An electronic scale 101 illustrated in FIG. 15(A) includes the salesperson-side operation section 106A and the customer-side operation section 106B that are configured with touchscreens, a weighing section 102 having a weighing pan 121, a printing section 104 that issues a product label L, a communication section 107 that communicates with a server apparatus 90 and the like via a network N, a storage section 108 that stores a product master, and a control section 110 (a manufacturing figure acquisition section 110A and a display control section 110B).

In addition, a label issuing apparatus 201 including an operation section 206 as illustrated in FIG. 15(B) may also be applied as the handling apparatus or the printing apparatus of the aspect of the present invention. The label issuing apparatus 201 illustrated in FIG. 15(B) includes a display operation section 206A configured with a touchscreen, an operation section 206B composed of fixed keys, a weighing section 202 having a weighing pan 221 connected as an option, a printing section 204, a communication section 207 that communicates with a server apparatus 90 and the like via a network N, a storage section 208 that stores a product master, and a control unit 210 (a manufacturing figure acquisition section 210A and a display control section 210B). Note that the label issuing apparatus 201 may be configured as a simple label issuing apparatus that does not include the weighing pan 221 and the weighing section 202.

## Claims

1. A printing apparatus (1) configured to print product information regarding products (A), comprising:
a production instruction acquisition section (10A) configured to acquire production instructions for the products (A); and
a control section (10B) configured to cause a display section (6) to display a product information group including pieces of product information regarding a plurality of kinds of the products (A), and accept, from a worker, printing instructions for product information regarding a certain kind of the products (A), wherein
the control section (10B) is further configured to extract product information regarding part of the products (A) from the product information group stored in a storage section (92), based on the products (A) for which the production instructions are acquired by the production instruction acquisition section (10A), and causes the display section (6) to display the extracted product information regarding the part of the products (A).

2. A product handling system (100) comprising:
a production instruction apparatus (90) configured to instruct production of products (A);
a product information storage apparatus (92) configured to store a product information group including pieces of product information regarding a plurality of kinds of the products (A); and
a handling apparatus (1) configured to cause a display section (6) to display the product information group, and accept, from a worker, printing instructions for product information regarding a certain kind of the products (A), wherein
the production instruction apparatus (90), the product information storage apparatus (92), and the handling apparatus (1) are communicably connected to each other via a network (N), and
the handling apparatus (1) is further configured to extract product information regarding part of the products (A) from the product information group stored in the product information storage apparatus (92), based on the products (A) for which production instructions have been given by the production instruction apparatus (90), and causes the display section (6) to display the extracted product information regarding the part of the products (A).

3. The product handling system (100) according to claim 2, wherein
the handling apparatus (1) includes a production figure acquisition section (10A) configured to acquire information regarding production figures in relation to the production instructions, and
the handling apparatus (1) causes the display section (6) to display the product information on the products (A) for which there are the production figures that are acquired by the production figure acquisition section (10A).

4. The product handling system (100) according to claim 3, further comprising
a terminal apparatus (70) configured separately from the handling apparatus (1) and configured to accept, from the production instruction apparatus (90), instructions of production of the products (A), wherein
the terminal apparatus (70) is further configured to generate, based on an input by an operator, information regarding the production figures acquired by the production figure acquisition section (10A).

5. The product handling system (100) according to any one of claims 2 to 4, wherein
the handling apparatus (1) further includes a printing section (4) configured to print the product information, and
the handling apparatus (1) is further configured to cause the display section (6) to display product information regarding the products (A) that is extracted based on the products (A) for which the production is instructed by the production instruction apparatus (90) so as to distinguish between product information regarding a printed product of the products (A) that is printed by the printing section (4) and product information regarding a non-printed product of the products (A) that is not printed by the printing section (4).
